(19)

Europäisches
Patentamt
European
Patent Office
Office européen
des brevets

(11)  **EP 3 439 362 A1**

(12)  **EUROPEAN PATENT APPLICATION**

(43) Date of publication:
**06.02.2019 Bulletin 2019/06**

(21) Application number: **18185786.3**

(22) Date of filing: **26.07.2018**

(51) Int Cl.:
***H04W 28/24*** *(2009.01)*

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **02.08.2017 JP 2017149560**

(71) Applicant: **Qucell Networks Co., Ltd.
Seongnam-si, Gyeonggi-do 13590 (KR)**

(72) Inventors:
 • **CHUNG, Jong Tae
  13621 Gyeonggi-do (KR)**
 • **JI, Seung Hwan
  13587 Gyeonggi-do (KR)**
 • **PARK, Ku Tai
  04595 Seoul (KR)**

(74) Representative: **Müller Verweyen
Patentanwälte
Friedensallee 290
22763 Hamburg (DE)**

(54)  **METHOD OF ALLOCATING DYNAMIC RADIO RESOURCES FOR LTE BACKHAUL SYSTEM**

(57)    According to the present invention, the dynamic resource allocation method for a wireless backhaul system is performed in the wireless backhaul system including a backhaul relay terminal wirelessly connected to a basic base station serving as a macro base station connected to a mobile communication core network, and wire-connected to a mobile communication base station or a WiFi AP serving as a backhaul base station to transmit data of a user terminal between the basic base station and the backhaul base station, and a backhaul controller for controlling the backhaul relay terminal between the core network and the basic base station. The method of the present invention includes the steps of: (a) receiving, by the backhaul controller, an initial terminal message from the backhaul relay terminal in a radio resource control (RRC) connection setup process to transmit the initial terminal message to the core network; (b) relaying, by the backhaul controller, an authentication procedure for the backhaul relay terminal between the core network and the basic base station; (c) relaying a radio bearer setup procedure for the backhaul relay terminal between the core network and the basic base station, by the backhaul controller; (d) relaying an access procedure for the backhaul relay terminal between the core network and the basic base station, by the backhaul controller; and (e) performing, by the backhaul controller, a procedure of additionally setting a bearer for guaranteeing fixed data transmission to the backhaul relay terminal according to a dynamic resource allocation algorithm of the backhaul controller established by dynamically reflecting a service state of the backhaul relay terminal between the basic base station and the backhaul controller.

**EP 3 439 362 A1**

**Description**

[Technical Field]

The present invention relates to a dynamic resource allocation method for a wireless backhaul system, and more particularly, to a dynamic resource allocation method for a wireless backhaul system, capable of dynamically allocating resources for a backhaul relay terminal by considering variable traffic states of user terminals connected to a basic base station and user terminals connected to a backhaul relay terminal in a wireless backhaul system using an LTE or LTE-A wireless transmission technology.

[Background Art]

As generally known in the art, a femto cell base station (hereinafter, simply referred to as a "femto base station") refers to a micro mobile communication base station connected to a mobile communication core network through a broadband network installed indoors such as a home or an office. The femto base station has various advantages in expanding an indoor coverage, improving call quality, and efficiently providing various wired/wireless convergence services.

3GPP long term evolution (LTE) or LTE advanced (LTE-A)(hereinafter, LTE and LTE-A are collectively referred to as 'LTE') has defined a base station called an evolved NodeB (eNB) or a home evolved NodeB (HeNB), in which the eNB refers to a macro base station which controls a general macro cell, and the home eNB refers to a femto base station that controls a femto cell. In other words, 3GPP takes into consideration of an environment for installing a femto base station connected only to specific users separately from the existing macro base station. Herein, the femto base station may be installed by a user or a provider for the purpose of expanding coverage, increasing capacity, or providing other distinctive services. The service coverage of the femto base station may be in the range from several meters minimally to macro service coverage maximally.

Meanwhile, a wired connection between a base station and a core network not only requires costs for the wired installation, but also increases additional costs for each additional installation of the base station. To solve the above problem, a wireless backhaul repay is installed between the base station and the core network, such that the installation cost may be minimized even if a base station is additionally installed.

Hereinafter, a base station wired to an LTE core network and wirelessly connected to a backhaul relay terminal, which generally includes a macro base station, is referred to as a 'basic base station', and a base station wire-connected to a backhaul relay terminal, which generally includes a femto base station or a WiFi access point (AP), is referred to as a backhaul base station.

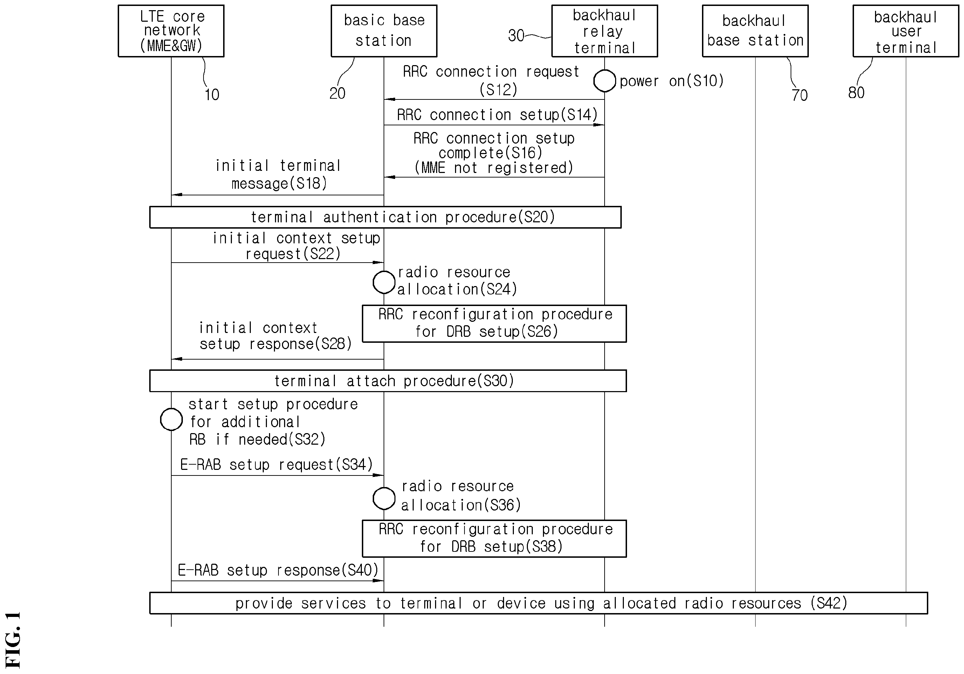

FIG. 1 is a sequence diagram describing the conventional resource allocation method of a wireless backhaul system. As shown in FIG. 1, according to the conventional resource allocation method of a wireless, such as LTE, backhaul system, when a backhaul relay terminal 30 is turned on (S10), a backhaul relay terminal 30 immediately starts a location registration procedure in an LTE network. In other words, the backhaul relay terminal 30 transmits a radio resource control (RRC) connection request message to a basic base station 20 (S12) in order to transmit data to a mobility management entity (MME) 10 which is an LTE core network. Then, the basic base station 20 transmits an RRC connection setup message to the backhaul relay terminal 30 to activate a radio bearer (RB) for transmitting the data (S14). The backhaul relay terminal 30 transmits an RRC connection setup complete message to the basic base station 20 to inform that the radio bearer activation is complete (S16), in which the RRC connection setup complete message does not include information about the registered MME because the backhaul relay terminal 30 has not yet been registered in the MME 10.

Next, the basic base station 20 transmits the data received through the RRC connection setup complete message to the MME 10 as an initial user equipment (UE) message (S18), in which an MME to be transmitted is randomly selected because the RRC connection setup complete message does not include information about the registered MME. Then, the MME 10 performs a UE authentication procedure for the backhaul relay terminal 30 (S20).

Next, the MME 10 transmits an initial context setup request message to the basic base station 20 (S22) to request for allocation of radio link resources with respect to a default bearer of the backhaul relay terminal 30, and the base station 20 receiving the message performs the radio resource allocation for the backhaul relay terminal 30 (S24). Next, the basic base station 20 performs a radio bearer reconfiguration procedure for DRB setup between the basic base station 20 and the backhaul relay terminal 30 based on contents of the allocation (S26). After completing the radio bearer setup as described above, the basic base station 20 transmits an initial context setup response message to the MME 10 (S28).

Next, the backhaul relay terminal 30 performs a UE attach procedure to the MME 10 through the preset radio bearer (S30), and the MME 10 verifies whether the backhaul relay terminal 30 is a valid terminal for the LTE network through the UE attach procedure.

Next, when determining that it is necessary to additionally setup a bearer for guaranteeing fixed data transmission to the backhaul relay terminal 30 (S32), the MME 10 transmits an E-UTRAN radio access bearer (E-RAB) setup request message including corresponding QoS information, such as a granted bit rate (GBR), to the basic base station 20 (S34). Then, the basic base station 20 receiving the message allocates radio resources satisfying the received QoS information to the backhaul relay terminal (S36).

Next, the basic base station 20 performs a radio bearer reconfiguration procedure (RRC reconfiguration procedure for DRB) between the backhaul relay terminal 30 and the basic base station based on the allocated contents (S38). After completing the radio bearer setup as described above, the basic base station 20 transmits an E-RAB setup response message to the MME 10. Thereafter, the basic base station 20 exchanges the data with the backhaul relay terminal 30 through the activated bearer, in which the basic base station 20 performs a scheduling in the above process so as to satisfy the QoS information, such as GBR, which is set through the E-RAB activation procedure.

Finally, the backhaul relay terminal 30 performs a function to transmit data, which is generated from a mobile communication terminal or a WiFi device receiving services through the backhaul base station, such as a 2G/3G base station, a 4G (LTE) base station, and a WiFi AP which are wire-connected to the backhaul relay terminal 30, to the basic base station 20 by using the activated bearer, or transfer the data received from the basic base station 20 to the mobile communication terminal or the WiFi device receiving the services (S42).

According to the resource allocation method of the conventional wireless backhaul system as described above, backhaul networks can be established without adding equipment to existing LTE networks or basic base stations or modifying existing equipment. In addition, fixed values are used without additionally reserving resources for the backhaul relay terminal, so that system software is easily implemented.

Whereas, when extra resources are not reserved for the backhaul relay terminal, the service quality for the user terminal which exchanges data through the backhaul relay terminal is deteriorated. When a large volume of resources are forcibly reserved for the backhaul relay terminal in view of the deterioration, the service quality of the user terminal which exchanges the data through the backhaul relay terminal is improved, however, the service quality of the user terminal connected to the basic base station is deteriorated.

Related document 1: Korean Patent Publication No. 10-2014-0077327 entitled "BACKHAUL REPEATER IN WIRELESS BACKHAUL SYSTEM AND METHOD FOR PROVIDING RESOURCE BETWEEN BASE STATIONS"

Related document 2: Korean Patent Registration No. 10-1610069 entitled "DYNAMIC RESOURCE ALLOCATING METHOD IN LTE WIRELESS BACKHAUL SYSTEM"

[Disclosure]

[Technical Problem]

In order to solve the above problem, an object of the present invention is to provide a dynamic resource allocation method for a wireless backhaul system, capable of dynamically allocating resources for a backhaul relay terminal by considering variable traffic states of user terminals connected to a basic base station and user terminals connected to a backhaul relay terminal in a wireless backhaul system using an LTE or LTE-A wireless transmission technology.

Another object of the present invention is to provide a dynamic resource allocation method for a wireless backhaul system to forcibly connect the backhaul relay terminal to the backhaul controller so as to operate the above-described dynamic resource allocation method.

[Technical Solution]

According to the present invention to achieve the above-mentioned objects, the dynamic resource allocation method for a wireless backhaul system, which is performed in a wireless backhaul system including a backhaul relay terminal wirelessly connected to a basic base station serving as a macro base station connected to a mobile communication core network, and wire-connected to a mobile communication base station or a WiFi AP serving as a backhaul base station to transfer data of a user terminal between the basic base station and the backhaul base station, and a backhaul controller for controlling the backhaul relay terminal between the core network and the basic base station, includes the steps of: (a) receiving an initial terminal message from the backhaul relay terminal in a radio resource control (RRC) connection setup process to transmit the initial terminal message to the core network, by the backhaul controller; (b) relaying an authentication procedure for the backhaul relay terminal between the core network and the basic base station, by the backhaul controller; (c) relaying a radio bearer setup procedure for the backhaul relay terminal between the core network and the basic base station, by the backhaul controller; (d) relaying an access procedure for the backhaul relay terminal between the core network and the basic base station, by the backhaul controller; and (e) performing, by the backhaul controller, a procedure of additionally setting a bearer for guaranteeing fixed data transmission to the backhaul relay terminal according to a dynamic resource allocation algorithm of the backhaul controller established by dynamically reflecting a service state of the backhaul relay terminal between the basic base station and the backhaul controller.

The step (a), when the backhaul relay terminal is turned on, includes the steps of: (a1) setting, by the backhaul relay terminal, an MME code of the backhaul controller as a code (MMEC) of a mobility management entity (MME) to which the backhaul relay terminal is connected; (a2) transmitting a radio resource control (RRC) connection request message to the basic base station to transmit data to the core network, by the backhaul relay terminal;

(a3) transmitting an RRC connection setup message for a radio bearer activation for data transmission to the backhaul relay terminal, by the basic base station; (a4) transmitting an RRC connection setup complete message including the MME code of the backhaul controller to the basic base station to inform a completion of the radio bearer activation, by the backhaul relay terminal; and (a5) transmitting , by the basic base station, the data received through the RRC connection setup complete message to the backhaul controller as an initial user equipment (UE) message after verifying the MME code of the backhaul controller.

The step (c) includes the steps of: (c1) requesting, by the core network, allocation of radio link resources to a default bearer of the backhaul relay terminal by transmitting an initial context setup request message to the basic base station via the backhaul controller; (c2) performing a radio resource allocation to the backhaul relay terminal, by the basic base station; (c3) performing, by the basic base station, a radio bearer reconfiguration procedure (RRC reconfiguration procedure for DRB Setup) between the basic base station and the backhaul relay terminal based on the allocation in step (c2); and (c4) transmitting, by the basic base station, an initial context setup response message to the core network via the backhaul controller after completing the radio bearer setup.

The step (d) includes transmitting, by the backhaul controller, an E-RAB setup request message including QoS information to the basic base station 20 (d1) to additionally set up the bearer for guaranteeing the fixed data transmission to the backhaul relay terminal, wherein the basic base station allocates a radio resource satisfying the QoS information to the backhaul relay terminal in response to step (d1), and performs a radio bearer setup procedure (RRC reconfiguration procedure for DRB setup) between the backhaul relay terminal and the basic base station based on the allocated contents, and the basic base station transmits an E-RAB setup response message to the backhaul controller after completing the radio bearer setup. The QoS information includes a granted bit rate (GBR) and a maximum bit rate (MBR).

In step (d), the dynamic resource allocation algorithm is established based on a service time zone of the backhaul relay terminal, a location of the backhaul relay terminal, the numbers of basic user terminals subject to a service of the basic base station and backhaul user terminals subject to a service of the backhaul relay terminal, and a data transmission rate.

[Advantageous Effects]

According to the dynamic resource allocation method for a wireless backhaul system of the present invention, resources can be efficiently allocated based on variable traffic states of a user terminal in the basic base station and a user terminal receiving the service through the backhaul relay terminal, so that service requests from multiple user terminals are satisfied and the efficiency in use of the resources can be improved.

[Description of Drawings]

FIG. 1 is a sequence diagram describing the conventional resource allocation method of a wireless backhaul system.
FIG. 2 is a network configuration diagram of a wireless backhaul system to which the method of the present invention is applied.
FIG. 3 is a sequence diagram describing overall operations of a dynamic resource allocation method for a wireless backhaul system of the present invention.
FIG. 4 is a sequence chart describing an algorithm of a dynamic resource allocation method for a wireless backhaul system of the present invention.

[Best Mode]

[Mode for Invention]

Hereinafter, a dynamic resource allocation method for a wireless backhaul system according to a preferred embodiment of the present invention will be described in detail with reference to the accompanying drawings.

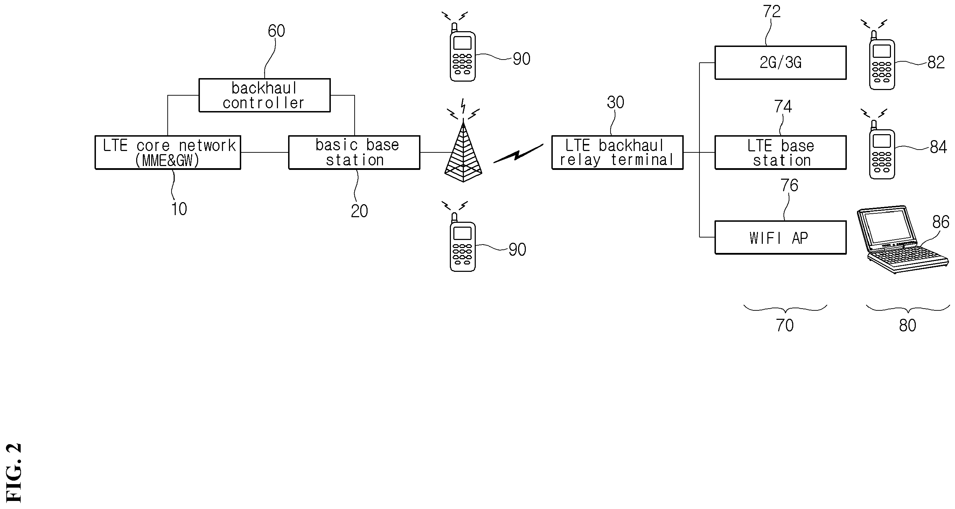

FIG. 2 is a network configuration diagram of a wireless backhaul system to which the method of the present invention is applied. As shown in FIG. 2, according to a network configuration of a wireless, such as an LTE wireless, backhaul system to which the method of the present invention is applied, the LTE backhaul relay terminal 30 provides a wireless link data exchange service between a basic base station 20 and a base station, such as a 2G/3G base station 72, a 4G (LTE) base station 74, an a WiFi access point (AP) (hereinafter collectively referred to as a "backhaul base station"; 70), connected to the LTE backhaul relay terminal and providing a wireless communication service to a mobile communication terminal 82 and 84 or a WiFi device 86 (hereinafter collectively referred to as a "backhaul user terminal"; 80).

The basic base station 20 is wirelessly connected to the backhaul relay terminal 30 and a user terminal (hereinafter referred to as a "basic user terminal") 90, and wire-connected to an LTE core network (MME & GW; hereinafter simply referred to as "MME") 10 so as provide a data exchange service therebetween. The backhaul controller 60 is connected to the MME 10 and the basic base station 20 to implement a function of efficiently managing radio resources for the backhaul relay terminal 30.

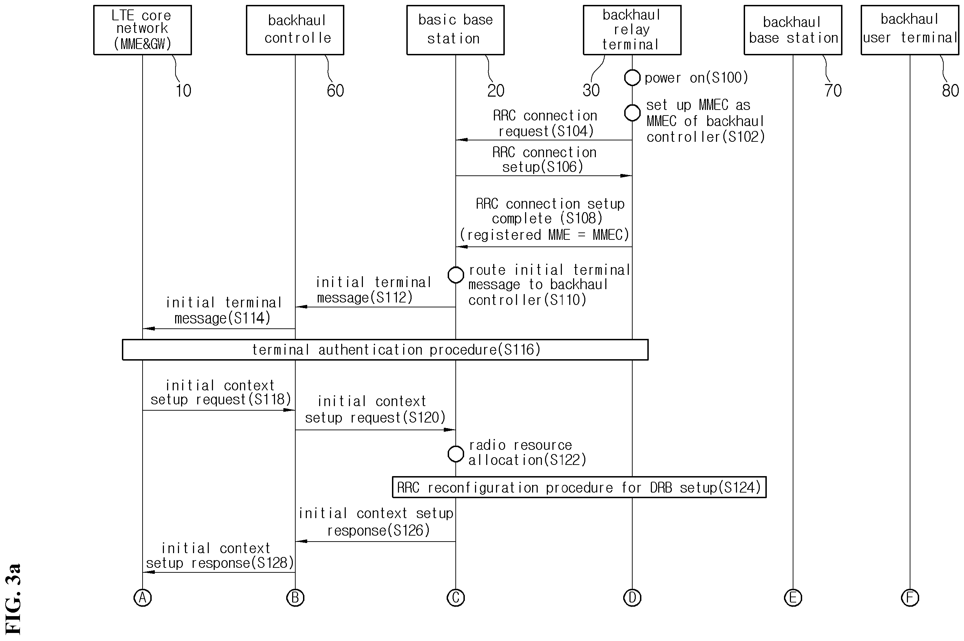

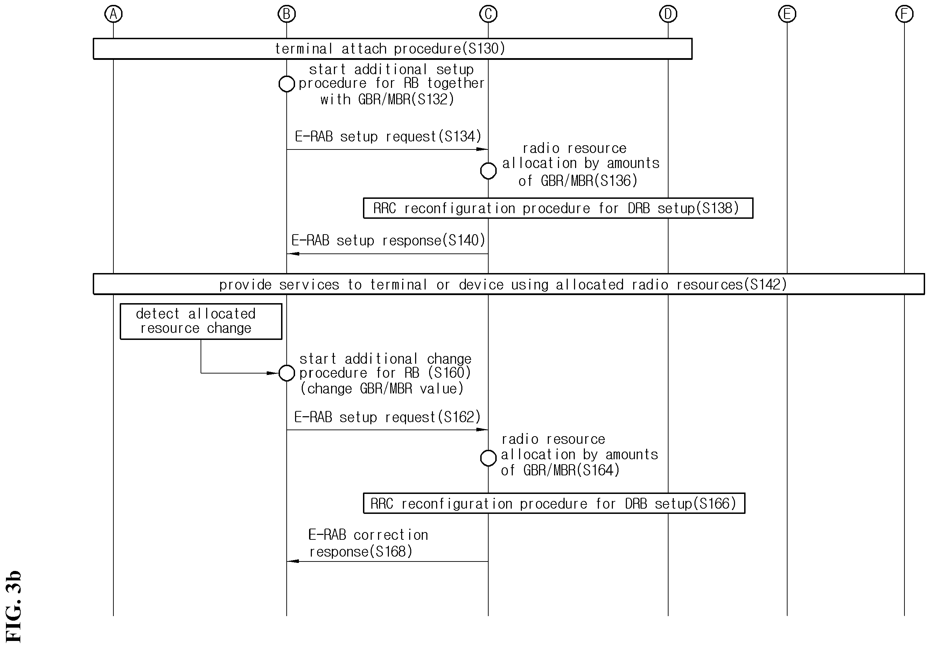

FIG. 3 is a sequence diagram describing overall operations of the dynamic resource allocation method for the wireless backhaul system of the present invention. As shown in FIG. 3, according to the dynamic resource allocation method for a wireless backhaul system of the present invention, when a backhaul relay terminal 30 is turned on (S100), the backhaul relay terminal 30 sets up an MME code (MMEC) of the backhaul controller 60 as a code (MMEC) of an MME to which the backhaul relay terminal is connected (S102), and immediately starts a location registration procedure in the LTE network. In other words, the backhaul relay terminal 30 transmits a radio resource control (RRC) connection request message to the basic base station 20 to transmit data to the MME 10. Then, the basic base station 20 transmits an RRC connection setup message to activate a radio bearer (RB) for transmitting the data to the backhaul relay terminal 30 (S106). In response thereto, the backhaul relay terminal 30 transmits an RRC connection setup complete message to the basic base station 20 to inform that the radio bearer activation is complete (S108), in which the preset MMEC (S102) is forcibly set as a registered MME for the message in order to access the backhaul controller 60 during the above process.

Next, the basic base station 20 transmits the data received through the RRC connection setup complete message to the backhaul controller 60 as an initial user equipment (UE) message (S112), in which the transmission of the message is performed by verifying registration MME information of the RRC connection setup complete message, in other words, the MMEC of the backhaul controller 60. The backhaul controller 60 transmits the initial UE message to the MME 10 again (S114).

Next, the MME 10 performs a UE authentication procedure for the backhaul relay terminal 30 for a location registration (S116). Accordingly, when the authentication procedure is completed, the backhaul controller 60 transmits data generated during the authentication procedure and received from the MME 10 to the basic base station 20, and transmits the data received from the basic base station 20 to the MME 10.

Next, the MME 10 requests for allocation of radio link resources with respect to a default bearer of the backhaul relay terminal 30 by transmitting (S120) an initial context setup request message to the basic base station 20 via the backhaul controller 60 (S118), and the base station 20 receiving the message performs the radio resource allocation for the backhaul relay terminal 30 (S122).

Next, the basic base station 20 performs a radio bearer reconfiguration procedure (RRC reconfiguration procedure for DRB) between the backhaul relay terminal 30 and the basic base station based on the allocated contents (S124). After completing the radio bearer setup as described above, the basic base station 20 transmits (S128) an initial context setup response message to the MME 10 via the backhaul controller 60 (S126).

Next, the backhaul relay terminal 30 performs a UE attach procedure to the MME 10 through the preset radio bearer (S130), and the MME 10 verifies whether the backhaul relay terminal 30 is a valid terminal for the LTE network through the UE attach procedure. The backhaul controller 60 transmits the data generated in the UE attach process and received from the MME 10 to the base station 20, and transmits the data received from the basic base station 20 to the MME 10.

Afterward, the backhaul controller 60 transmits an E-RAB setup request message including QoS information, such as a GBR and a maximum bit rate (MBR), to the basic base station 20 to additionally set up the bearer for guaranteeing the fixed data transmission to the backhaul relay terminal 30 (S132), in which the details for setting the GBR will be described later. Meanwhile, after the basic base station 20 receiving the message allocates radio resources satisfying the received QoS information, in other words, the amount corresponding to the GBR and MBR, for the backhaul relay terminal (S136), the basic base station 20 performs a radio bearer reconfiguration procedure (RRC reconfiguration procedure for DRB setup) between the basic base station 20 and the backhaul relay terminal 30 based on the allocation (S138). After completing the radio bearer setup as described above, the basic base station transmits an E-RAB setup response message to the backhaul controller 60.

Thereafter, the basic base station 20 exchanges the data with the backhaul relay terminal 30 through the activated bearer, in which the basic base station 20 performs a scheduling to satisfy the QoS information, such as GBR, which is set through the E-RAB activation procedure. Meanwhile, the backhaul relay terminal 30 performs a function to transmit data, which is generated in the backhaul user terminal 80 receiving the service through the backhaul base station 70 connected to the backhaul relay terminal 30, to the basic base station 20 by using the activated bearer, or transfer the data received from the basic base station 20 to the backhaul user terminal receiving the services (S142).

Next, as described later, the backhaul controller 60 performs an additional RB change procedure for the radio link (E-RAB) already allocated to the backhaul base station 30 (S160-S168) when a change for reserved resources is required, in which the procedure is the same as the initial setting in steps S132 to S140 described above. In addition, the change procedure for the radio link is repeatedly performed according to the result of monitoring traffic states via the backhaul relay terminal 30.

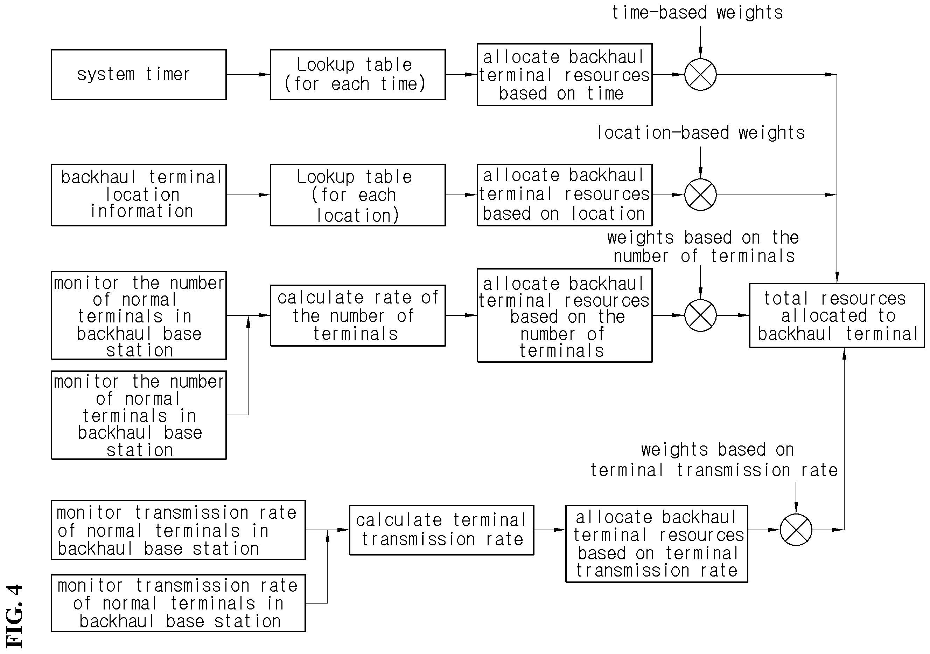

FIG. 4 is a sequence chart describing the dynamic resource allocation algorithm in the wireless backhaul system of the present invention. As shown in FIG. 4, the dynamic resource allocation method for the backhaul relay terminal in the wireless backhaul system of the present invention may be operated on the basis of the time, the location of the backhaul relay terminal, the number of basic user terminals 90 subject to the service of the basic base station 20 and the number of backhaul user terminals 80 subject to the service of the backhaul relay terminal 30, and the data transmission rate.

First, the time-based algorithm is a method of varying the amount of resources allocated to the backhaul relay terminal 30 for each specific time. For example, when the backhaul network is established in a suburb industrial complex area, a large amount of resources are allocated to the backhaul relay terminal 30 during working hours, but a small amount of resources are maintained after completion of the working hours. To this end, the backhaul controller 60 is provided with a system timer and a lookup table, such that the resource allocation for the backhaul relay terminal 30 may be different on a time basis, in which time-based weights may be applied in the process.

Equations 1 and 2 below indicate a time-based dynamic resource allocation algorithm in the wireless backhaul system of the present invention.

【Equation 1】

$$GBR\_tot = GBR\_tot\_gue + GBR\_tot\_bue = Ratio\_t\_gue \times GBR\_tot + Ratio\_t\_bue \times GBR\_tot$$

【Equation 2】

$$Ratio\_t\_gue + Ratio\_t\_bue = 1$$

In the above equations 1 and 2, 'GRB_tot' indicates the total amount of radio link resources of the basic base station 20, and 'GRB_tot_gue' indicates the total amount of radio link resources allocated to the basic user terminal 90 of the basic base station 20 among the total radio links of the basic base station 20. 'GRB_tot_bue' indicates the total amount of radio link resources allocated to the backhaul relay terminal 30 in the total radio links of the basic base station 20, and 'Ratio_t_gue' and 'Ratio_t_bue' indicate the ratios of radio link resources allocated to the basic user terminal 90 of the basic base station 20 and the backhaul user terminal 80 of the backhaul relay terminal 30 at a specific time, respectively, where the sum is 1.

Next, the location-based algorithm is a method of varying the amount of resources allocated to the backhaul relay terminal 30 for each specific location of the basic base station 20, in which the location of the backhaul relay terminal 30 may be obtained through a location based service procedure or determined through cell ID information of the basic base station 20 to which the backhaul relay terminal 30 is connected. To this end, the backhaul controller 60 may be provided with lookup data for each location of the terminal, and change the allocation of resources to the backhaul relay terminal 30 on a location basis, in which location-based weights may be applied in the process.

Equations 3 and 4 below indicate a location based dynamic resource allocation algorithm in the wireless backhaul system of the present invention.

【Equation 3】

$$GBR\_tot = GBR\_tot\_gue + GBR\_tot\_bue = Ratio\_l\_gue \times GBR\_tot + Ratio\_l\_bue \times GBR\_tot$$

【Equation 4】

$$Ratio\_l\_gue + Ratio\_l\_bue = 1$$

In the above equations 3 and 4, 'Ratio_l_gue' and 'Ratio_l_bue' indicate the ratios of radio link resources allocated to the basic user terminal 90 of the basic base station 20 and the backhaul user terminal 80 of the backhaul relay terminal 30 at a specific location, respectively, where the sum is 1.

Next, the algorithm based on the number of terminals is a method of varying the amount of resources allocated to the backhaul relay terminal 30 based on numbers of basic user terminals 90 subject to a service of the basic base station 20 and backhaul user terminals 80 subject to a service of the backhaul relay terminal 30. To this end, the backhaul controller 60 may monitor the number of base user terminals 90 in basic base station 20, calculate the ratio of the number of base user terminals 90 subject to the service of the basic base station 20 and the number of backhaul user terminals 80 subject to the service of the backhaul relay terminal 30, and then vary the resource allocation for the backhaul relay terminal 30 based on the calculated result, in which weights based on the number of terminals may be applied in the process.

Equations 5 to 8 below indicate a dynamic resource allocation algorithm based on the number of terminals in the LTE wireless backhaul system of the present invention.

【Equation 5】

$$GBR\_tot = GBR\_tot\_gue + GBR\_tot\_bue = Ratio\_n\_gue \times GBR\_tot + Ratio\_n\_bue \times GBR\_tot$$

【Equation 6】

$$Ratio\_n\_gue + Ratio\_n\_bue\_gue = 1$$

【Equation 7】

$$Ratio\_n\_gue = UE\_tot\_n\_benb / (UE\_tot\_n\_benb + UE\_tot\_n\_bue)$$

【Equation 8】

$$Ratio\_n\_bue\_gue = UE\_tot\_n\_bue / (UE\_tot\_benb + UE\_tot\_bue)$$

In the above equations 5 to 8, 'UE_tot_n_benb' indicates the number of basic user terminals receiving the service of the basic base station 20, and 'UE_tot_n_bue' indicates the number of backhaul user terminals receiving the service of the backhaul relay terminal 30.

Finally, the data transmission rate-based algorithm is a method of varying the amount of resources allocated to the backhaul relay terminal 30 based on numbers of the total transmission rate of the basic user terminals 90 subject to the service of the basic base station 20 and the transmission rate of the backhaul user terminals 80 subject to the service of the backhaul relay terminal 30. To this end, the backhaul controller 60 may monitor the transmission rates of the user terminals in the basic base station 20 and the backhaul relay terminal 30, calculate the rate therebetween, and vary the resource allocation for the backhaul relay terminal 30 based on the calculated result, in which weights based on the terminal data rate may be applied in the process.

Equations 9 to 12 below indicate a data rate-based dynamic resource allocation algorithm in the LTE wireless backhaul system of the present invention.

【Equation 9】

GBR_tot = GBR_tot_gue + GBR_tot_bue = Ratio_r_gue x
GBR_tot + Ratio_r_bue_gue x GBR_tot

【Equation 10】

Ratio_r_gue + Ratio_r_bue_gue = 1

【Equation 11】

Ratio_r_gue = UE_tot_n_benb / (UE_tot_r_benb +
UE_tot_r_bue)

【Equation 12】

Ratio_n_bue_gue = UE_tot_r_bue / (UE_tot_r_benb +
UE_tot_r_bue)

In the above equations 9 to 12, 'UE_tot_r_benb' indicates a sum of basic user terminal transmission rates being served by the basic base station 20, and 'UE_tot_r_bue' represents a sum of the transmission rates of the backhaul user terminals being served by the backhaul relay terminal 30.

The dynamic resource allocation method for a wireless backhaul system of the present invention described in detail with reference to the accompanying drawings is just an illustrative embodiment, the present invention is not limited thereto, and it will be apparent that various substitutions, deformations and modifications are available within the scope without departing from the idea of the invention. Therefore, the actual scope of the present invention will be defined by the appended claims and their equivalents.

[Description of Reference numerals]

| | |
|---|---|
| 10: LTE core network | 20: basic base station |
| 30: backhaul relay terminal | 60: backhaul controller |
| 70: backhaul base station | |
| 80: backhaul user terminal | 90: basic user terminal |

**Claims**

1. A method of allocating dynamic resources performed in a wireless backhaul system, which includes a backhaul relay terminal wirelessly connected to a basic base station serving as a macro base station connected to a mobile communication core network, and wire-connected to a mobile communication base station or a WiFi AP serving as a backhaul base station to transmit data of a user terminal between the basic base station and the backhaul base station, and a backhaul controller for controlling the backhaul relay terminal between the core network and the basic base station, the method comprising:

   (a) receiving an initial terminal message, by using the backhaul controller, from the backhaul relay terminal during a radio resource control (RRC) connection setup process to transmit the initial terminal message to the core network;
   (b) relaying an authentication procedure for the backhaul relay terminal between the core network and the basic base station by using the backhaul controller;
   (c) relaying a radio bearer setup procedure for the backhaul relay terminal between the core network and the basic base station by using the backhaul controller;

(d) relaying an access procedure for the backhaul relay terminal between the core network and the basic base station by using the backhaul controller; and

(e) performing, by using the backhaul controller, a procedure of additionally setting a bearer for guaranteeing fixed data transmission to the backhaul relay terminal according to a dynamic resource allocation algorithm of the backhaul controller established by dynamically reflecting a service state of the backhaul relay terminal between the basic base station and the backhaul controller.

2. The method of claim 1, wherein step (a) comprises:

(a1) setting a mobility management entity (MME) code of the backhaul controller, by using the backhaul relay terminal, as a code of an MME to which the backhaul relay terminal is connected, when the backhaul relay terminal is turned on;

(a2) transmitting a radio resource control (RRC) connection request message to the basic base station to transmit data to the core network by using the backhaul relay terminal;

(a3) transmitting an RRC connection setup message for a radio bearer activation for data transmission to the backhaul relay terminal by the basic base station;

(a4) transmitting an RRC connection setup complete message including the MME code of the backhaul controller to the basic base station to inform a completion of the radio bearer activation by using the backhaul relay terminal; and

(a5) transmitting the data received through the RRC connection setup complete message to the backhaul controller as an initial user equipment (UE) message by using the basic base station, after verifying the MME code of the backhaul controller.

3. The method of claim 2, wherein step (c) comprises:

(c1) requesting allocation of radio link resources to a default bearer of the backhaul relay terminal by transmitting an initial context setup request message to the basic base station via the backhaul controller by using the core network;

(c2) performing a radio resource allocation to the backhaul relay terminal by using the basic base station;

(c3) performing a radio bearer reconfiguration procedure (RRC reconfiguration procedure for DRB Setup) between the basic base station and the backhaul relay terminal based on contents allocated in step (c2) by using the basic base station; and

(c4) transmitting an initial context setup response message to the core network via the backhaul controller after completing the radio bearer reconfiguration by using the basic base station.

4. The method of claim 3, wherein step (d) comprises (d1) transmitting an E-RAB setup request message including quality of service (QoS) information to the basic base station (20) to additionally set up the bearer for guaranteeing the fixed data transmission to the backhaul relay terminal by using the backhaul controller, and wherein

the basic base station allocates radio resources satisfying the QoS information to the backhaul relay terminal in response to step (d1), and then performs a radio bearer setup procedure (RRC reconfiguration procedure for DRB setup) between the backhaul relay terminal (30) and the basic base station based on the allocated contents, and the basic base station transmits an E-RAB setup response message to the backhaul controller after completing the radio bearer setup.

5. The method of claim 4, wherein the QoS information includes a granted bit rate (GBR) and a maximum bit rate (MBR).

6. The method of any one of claims 1 to 5, wherein the dynamic resource allocation algorithm in step (d) is established on a basis of a service time zone of the backhaul relay terminal, a location of the backhaul relay terminal, numbers of basic user terminals subject to a service of the basic base station and backhaul user terminals subject to a service of the backhaul relay terminal, and a data transmission rate.

## FIG. 1

**FIG. 2**

EP 3 439 362 A1

**FIG. 3a**

| LTE core network (MME&GW) | backhaul controlle | basic base station | backhaul relay terminal | backhaul base station | backhaul user terminal |
|---|---|---|---|---|---|
| 10 | 60 | 20 | 30 | 70 | 80 |

power on(S100)

set up MMEC as MMEC of backhaul controller(S102)

RRC connection request(S104)

RRC connection setup(S106)

RRC connection setup complete (S108) (registered MME = MMEC)

route initial terminal message to backhaul controller(S110)

initial terminal message(S112)

initial terminal message(S114)

terminal authentication procedure(S116)

initial context setup request(S118)

initial context setup request(S120)

radio resource allocation(S122)

RRC reconfiguration procedure for DRB setup(S124)

initial context setup response(S126)

initial context setup response(S128)

A    B    C    D    E    F

12

# FIG. 3b

terminal attach procedure(S130)

start additional setup procedure for RB together with GBR/MBR(S132)

E-RAB setup request(S134)

radio resource allocation by amounts of GBR/MBR(S136)

RRC reconfiguration procedure for DRB setup(S138)

E-RAB setup response(S140)

provide services to terminal or device using allocated radio resources(S142)

detect allocated resource change

start additional change procedure for RB (S160) (change GBR/MBR value)

E-RAB setup request(S162)

radio resource allocation by amounts of GBR/MBR(S164)

RRC reconfiguration procedure for DRB setup(S166)

E-RAB correction response(S168)

Ⓐ Ⓑ Ⓒ Ⓓ Ⓔ Ⓕ

## FIG. 4

system timer

Lookup table (for each time)

allocate backhaul terminal resources based on time

time-based weights

backhaul terminal location information

Lookup table (for each location)

allocate backhaul terminal resources based on location

location-based weights

monitor the number of normal terminals in backhaul base station

monitor the number of normal terminals in backhaul base station

calculate rate of the number of terminals

allocate backhaul terminal resources based on the number of terminals

weights based on the number of terminals

total resources allocated to backhaul terminal

monitor transmission rate of normal terminals in backhaul base station

monitor transmission rate of normal terminals in backhaul base station

calculate terminal transmission rate

allocate backhaul terminal resources based on terminal transmission rate

weights based on terminal transmission rate

Europäisches
Patentamt

European
Patent Office

Office européen
des brevets

# EUROPEAN SEARCH REPORT

Application Number

EP 18 18 5786

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | ZTE: "Discussion on Wi-Fi access as a multi-RAT support in mobile relay architectures", 3GPP DRAFT; R3-121173-DISCUSSION ON WI-FI ACCESS AS A MULTI-RAT SUPPORT IN MOBILE RELAY ARCHITECTURES, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG3, no. Prague, Czech Republic; 20120521 - 20120525, 11 May 2012 (2012-05-11), XP050611013, [retrieved on 2012-05-11] * 2.2 Impact on the different architectures * ----- | 1-6 | INV. H04W28/24 |
| Y | LG ELECTRONICS: "Consideration on Resource Allocation for Relay Backhaul Link", 3GPP DRAFT; R1-090790, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. Athens, Greece; 20090203, 3 February 2009 (2009-02-03), XP050318647, [retrieved on 2009-02-03] * 2.2 Dynamic Resource Allocation scheme * ----- | 1-6 | |
| | | | **TECHNICAL FIELDS SEARCHED (IPC)** H04W |

The present search report has been drawn up for all claims

| Place of search | Date of completion of the search | Examiner |
|---|---|---|
| The Hague | 11 October 2018 | Iavarone, Federico |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## REFERENCES CITED IN THE DESCRIPTION

### Patent documents cited in the description

- KR 1020140077327
- KR 101610069